(19) **Europäisches Patentamt**

**European Patent Office**

**Office européen des brevets**

(11) **EP 0 891 139 B1**

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(51) Int Cl.⁷: **A23G 9/04**, A23G 9/22, F25C 5/04

(21) Anmeldenummer: **97906968.9**

(22) Anmeldetag: **21.03.1997**

(86) Internationale Anmeldenummer:
**PCT/CH97/00119**

(87) Internationale Veröffentlichungsnummer:
**WO 97/36498 (09.10.1997 Gazette 1997/43)**

(54) **GERÄT ZUM HERSTELLEN VON LEBENSMITTEL IN MOUSSEARTIGER KONSISTENZ**

APPARATUS FOR PRODUCING FOOD OF MOUSSE-LIKE CONSISTENCY

APPAREIL POUR PRODUIRE DES ALIMENTS AVEC UNE CONSISTANCE MOUSSEUSE

(84) Benannte Vertragsstaaten:
**AT CH DE ES FR GB IT LI LU NL**

(30) Priorität: **02.04.1996 CH 85296**

(43) Veröffentlichungstag der Anmeldung:
**20.01.1999 Patentblatt 1999/03**

(73) Patentinhaber: **Paco-Trade AG**
**6342 Baar (CH)**

(72) Erfinder:
• **SCHMIDT, Bruno**
**CH-6318 Walchwil (CH)**

• **MALMBERG, Lars**
**CH-6300 Zug (CH)**

(74) Vertreter: **Troesch Scheidegger Werner AG**
**Patentanwälte**
**Postfach**
**8032 Zürich (CH)**

(56) Entgegenhaltungen:
**EP-A- 0 062 805**     **CH-A- 685 321**
**US-A- 4 547 076**     **US-A- 4 668 561**
**US-A- 5 150 967**     **US-A- 5 208 050**
**US-A- 5 402 949**

**Beschreibung**

Die vorliegende Erfindung betrifft eine Vorrichtung zum Herstellen eines crèmeartigen oder schaumartigen Nahrungsmittels gemäss dem Oberbegriff nach Anspruch 1, ein Verfahren, sowie ein Gastronomie- oder Haushaltgerät.

Vorrichtungen und Verfahren zum Herstellen von Softeis sind bekannt. So beschreiben beispielsweise die EP 0 062 805 oder das Schweizer Patent CH 685 321 ein Gerät zum Herstellen von Softeis, wobei eine blockförmige gefrorene Ausgangsmasse mittels einer Zerkleinerungseinrichtung abgeschabt, geschlagen und mit Luft vermischt wird. Dabei wird eine gleichbleibende Softeisqualität mittels eines gleichmässigen Zerkleinerungsvorganges und durch Ueberdruck über der abzuschabenden Masse erhalten.

In der Praxis hat es sich aber gezeigt, dass durch den Ueberdruck konstruktive Probleme entstehen. Beispielsweise ist das Abdichten der Antriebswelle gegen das Eindringen von erzeugtem Softeis infolge des Ueberdruckes ein Problem und kann nur mittels aufwendiger Konstruktionstechnik verhindert werden. Zudem hat es sich gezeigt, dass der Gasüberdruck praktisch keinen Einfluss auf die Konsistenz der Softeismasse ausübt.

Es ist daher eine Aufgabe der vorliegenden Erfindung, eine Vorrichtung bzw. ein Verfahren für das Erzeugen von Softeis oder genereller von mousseartigen Speisen vorzuschlagen, wobei die zu erzeugende crèmeartige oder schaumartige Masse mit steuerbarer oder gleichmässiger Konsistenz bzw. Qualität erhalten werden kann, ohne dass mit Ueberdruck gearbeitet werden muss. Erfindungsgemäss wird die gestellte Aufgabe mittels einer Vorrichtung, insbesondere nach Anspruch 1 beziehungsweise mittels eines Verfahrens gemäss dem Wortlaut nach Anspruch 11 gelöst.

Vorgeschlagen wird eine Vorrichtung zum Herstellen eines crèmeartigen oder schaumartigen Nahrungsmittels bzw. einer mousseartigen Speise, aufweisend ein Gefäss zur Aufnahme eines im wesentlichen in Blockform vorliegenden Nahrungsmittels sowie eine Zerkleinerungseinrichtung mit veränderbarem Vorschub des Zerkleinerungsorganes in Richtung zum Gefäss. Die Zerkleinerungseinrichtung weist an ihrem, dem Gefäss bzw. dem Nahrungsmittel zugerichteten Ende, ein Rotationsflügel aufweisendes Zerkleinerungsorgan auf und weiter sind Mittel vorgesehen, um das Verhältnis Flügelrotationsgeschwindigkeit zu Vorschubgeschwindigkeit zu variieren. Es hat sich gezeigt, dass das Verhältnis Flügelrotationsgeschwindigkeit zu Flügelvorschubgeschwindigkeit im wesentlichen über die Konsistenz der zerkleinerten Masse entscheidet, womit, wie erfindungsgemäss gefordert, sowohl eine gleichbleibende bzw. gleichmässige Qualität erzielt werden kann, wie auch eine geforderte einzustellende Konsistenz der mousseartigen Speise. Somit entfällt die Notwendigkeit des Gasüberdruckes in der Vorrichtung zum Herstellen der mousseartigen Speise, wie beispielsweise aus dem Stand der Technik als erforderliches Merkmal bekannt.

Erfindungsgemäss wird vorgeschlagen, dass die Zerkleinerungseinrichtung eine Vorschubeinheit aufweist, umfassend eine rotierende Hohlwelle sowie eine innenliegende, mit der Hohlwelle über mindestens ein Gewinde oder Profil rotierend, wirkverbundene Gewindespindel, wobei entweder die Hohlwelle oder die innenliegende Gewindespindel langetrieben ist und die für den Vorschub erforderliche relative Drehzahländerung zwischen Welle und Spindel mittels eines weiteren Antriebsaggregates bewirkt wird, welches mit der Welle oder der Spindel fest verbunden ist und das jeweils andere Element, d.h. die Spindel oder die Welle, antreibt bzw. verzögert.

Gemäss einer bevorzugten Ausführungsvariante ist das Antriebsaggregat ein Schrittmotor, welcher auf der Hohlwelle montiert ist, mit dieser mitdreht und dessen Antriebswelle mit der Gewindespindel verbunden ist.

Gemäss einer weiteren bevorzugten Ausführungsvariante umfasst die erfindungsgemäss vorgeschlagene Vorrichtung eine mechanische Füllgraderkennung, mittels welcher der Füllgrad im Gefäss zur Aufnahme des blockförmigen, vorzugsweise gefrorenen Nahrungsmittels festzustellen bzw. zu erkennen ist. Anstelle der mechanischen Füllgraderkennung wird in einer weiteren bevorzugten Ausführungsvariante eine elektronische Füllgraderkennung vorgeschlagen mittels Schrittausfallzählung.

In einer erneut weiteren Ausführungsvariante der erfindungsgemäss vorgeschlagenen Vorrichtung ist eine automatische Rotationsflügelarretierung vorgeschlagen, wobei es sich entweder um eine Schrägverzahnungskupplung mit magnetischer Flügelhalterung handeln kann oder um eine Schrägverzahnungskupplung mit mechanischer Flügelhalterung. Sämtliche erwähnten sowie weitere bevorzugte Ausführungsvarianten sind in den abhängigen Ansprüchen 2-9 charakterisiert.

Weiter vorgeschlagen wird ein Verfahren zur Herstellung einer mousseartigen Speise gemäss dem Wortlaut nach Anspruch 10. Bevorzugte Ausführungsvarianten von erfindungsgemässen Verfahren sind in den abhängigen Ansprüchen 11-14 charakterisiert.

Die Erfindung wird nun anschliessend beispielsweise und unter Bezug auf die beigefügten Figuren näher erläutert.

Dabei zeigen:

Fig. 1     schematisch dargestellt in Perspektive und teilweise aufgeschnitten ein erfindungsgemässes Gerät zur Herstellung einer mousseartigen Speise,

Fig. 2     ausschnittsweise und in Vergrösserung dargestellt eine Anordnung zur mechanischen Füllgraderkennung in einem Gerät gemäss Fig. 1,

Fig. 3    schematisch dargestellt und visualisiert die Vorgehensweise bei der elektronischen Füllgraderkennung mittels Schrittausfallzählung für ein Gerät gemäss Fig. 1, und

Fig. 4    im Schnitt die Abdeckung des Gefässdeckels für die Aufnahme der blockförmigen Speise gemäss Fig. 1 umfassend eine Schrägverzahnkupplung mit magnetischer Flügelhalterung in der Abdeckung.

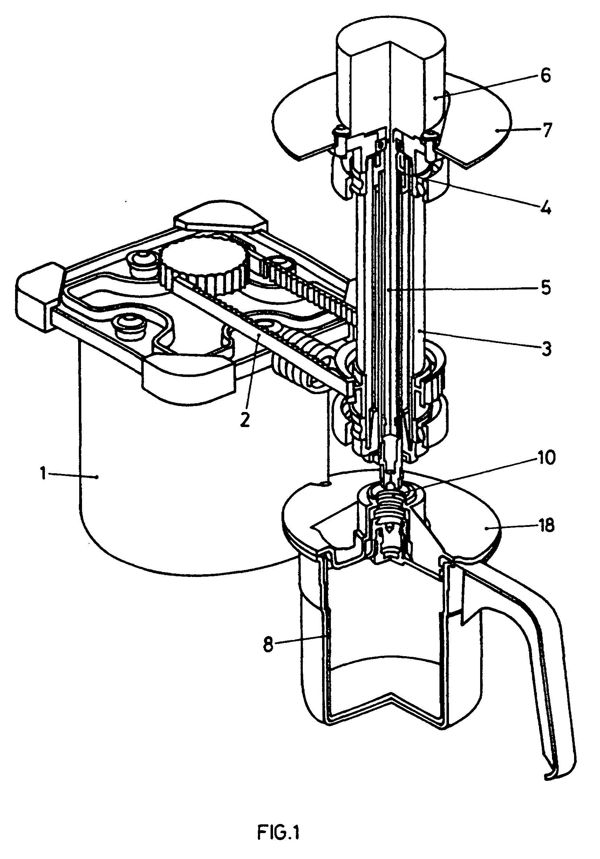

Im wesentlichen richtet sich das in Figur 1 dargestellte Gerät für die Herstellung eines Nahrungsmittels mit mousseartiger Konsistenz nach einem Gerät zur Herstellung von Softeis, beispielsweise beansprucht im Schweizer Patent CH 685 321. Entsprechend wird auf eine eingehende Würdigung der Funktionsweise dieses Gerätes verzichtet und auf die erwähnte Schweizer Patentschrift verwiesen. Im Gegensatz zum Gerät beschrieben im Stand der Technik, weist das erfinderische Gerät gemäss Fig. 1 nicht zwingend eine Zuleitung auf für das Erzeugen eines Ueberdruckes, da das Erzeugen eines Ueberdruckes erfindungsgemäss nicht erforderlich ist.

Eine rotierende Hohlwelle 3 mit Innenprofil nimmt eine Leitmutter 4 mit. Die Leitmutter verfügt über ein Innengewinde, in welchem eine Gewindestange bzw. -spindel 5 läuft. Erfährt die Gewindestange 5 eine relative Drehzahländerung gegenüber der mittels eines Motors 1 und eines Zahnriemens 2 gleichmässig angetriebenen Hohlwelle 3, so erfolgt ein Vorschub entsprechend der Richtung der Drehzahländerung. Falls die Drehzahländerung positiv oder negativ ist, wird entsprechend die Gewindestange bzw. Gewindespindel abgesenkt oder zurückgezogen. Beim Absenken wird die Gewindespindel 5 durch die Oeffnung 10 im Deckel 18 eines Bechers 8 abgesenkt, um gegen eine im Innern 9 des Bechers 8 gelagerte blockförmige Speise (nicht dargestellt) getrieben zu werden. Durch frontseitig an der Gewindespindel 5 angeordnete Rotationsflügel bzw. Schabelemente (nicht dargestellt) wird die gegebenenfalls gefrorene Speise abgeschabt zum Herstellen des mousseartigen Nahrungsmittels.

Bei der neu entwickelten Vorschubeinheit erfolgt die relative Drehzahländerung der Gewindestange nicht, wie in der CH 685 321 beschrieben, mittels starr gekoppeltem Getriebe und mechanischer bzw. elektrischer Kupplungen, sondern über einen auf der Hohlwelle 3 montierten Schrittmotor 6, der sich mit dieser mitdreht und dessen Antriebswelle mit der Gewindestange bzw. Gewindespindel 5 fix gekoppelt ist. Die Stromversorgung und Impulszuführung für die Motorsteuerung erfolgt beispielsweise über Schleifringe 7 oder Kohlebürsten.

Bei Einsatz einer entsprechenden Steuerelektronik können somit erstmals die Vorschubgeschwindigkeit, die Richtung und die Weglänge, d.h. die +/- Anzahl der Schritte/Umdrehungen des Schrittmotors, unabhängig von der Rotationsgeschwindigkeit der Hohlwelle 3 gewählt bzw. eingestellt werden. Diese Technik ermöglicht es, die Konsistenz der zerkleinerten Masse stufenlos den Bedürfnissen anzupassen, von kristallin bis flüssig.

Die Einstellung der Konsistenz, die Anzahl der Portionen und deren Grösse kann sowohl manuell mittels Schalter/Tasten oder Regler, als auch automatisch durch

-    Scannen der Inhaltsangabe des eingesetzten Bechers,
-    Einstecken eines Datenträgers mit Programmhinweisen,
-    Starten entsprechender Software-Programme (Rezepte), usw. erfolgen.

Mittels des erfindungsgemäss vorgeschlagenen Gefässes ist es möglich, sowohl aus blockförmigen gefrorenen Nahrungsmitteln, angeordnet im Innern 9 des Bechers 8, mousseartige Speisen zu erzeugen, wie auch aus nicht gefrorenen Nahrungsmitteln, welche in relativ fester bzw. blockartiger Form vorliegen. Dabei ist es möglich, sowohl Softeis herzustellen, wie aber auch mousseartige Speisen wie beispielsweise Lachsmousse, Gemüsemousse, Fleischmousse, etc.

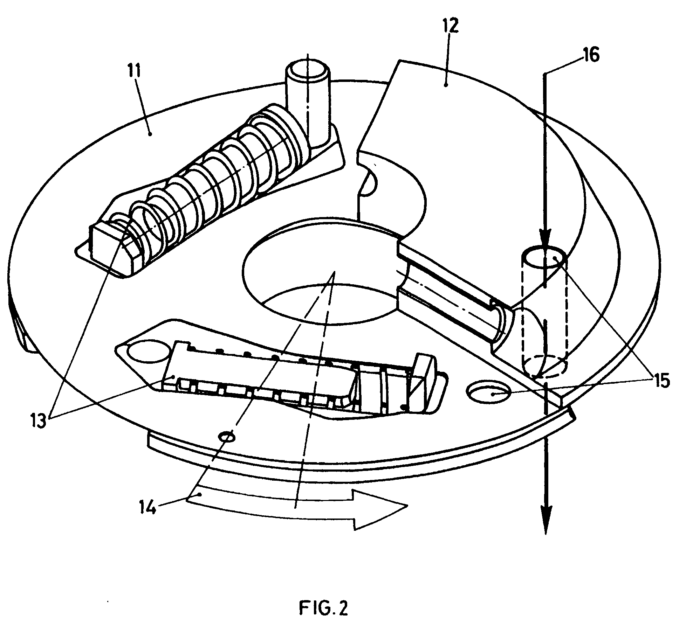

Für eine portionsweise Abarbeitung der blockförmig, vorzugsweise gefrorenen Masse, bedarf es der exakten Erkennung der jeweiligen Blockgrösse bzw. des Füllgrades des Bechers 8. Erfindungsgemäss werden zwei Techniken vorgeschlagen für eine portionsweise Abarbeitung der im Innern 9 des Bechers 8 vorliegenden blockförmigen Masse. Eine erste Ausführungsvariante betrifft eine mechanische Füllgraderkennung mittels Relativverdrehung eines Torsionselementes im Antrieb. Die Funktionsweise und der mechanische Aufbau dieser Technik werden nun unter Bezug auf Figur 2 wie folgt beschrieben:

Die Welle des Antriebmotors 1 ist mit einer Scheibe 11 fest verbunden. Eine weitere Scheibe 12 mit der weiterführenden Antriebswelle kann sich mittels eines Gleitlagers auf der Motorwelle frei bewegen. Die kraftschlüssige Verbindung der beiden Antriebswellen erfolgt über die quer zur Drehrichtung angeordneten Federanordnungen 13 mit Endanschlag.

Die Abstimmung der Federparameter (Federkonstante und Vorspannung) ist so ausgelegt, dass es beim Start und im Leerlauf zu keiner Relativverdrehung der beiden Scheiben kommt.

Erst beim Auftreffen des rotierenden Rotationsflügels auf die gefrorene Masse und der daraus resultierenden Reibung erfolgen eine Verdrehung der Scheiben zueinander, schematisch mit Pfeil 14 dargestellt, sowie ein Zusammendrücken der Feder(-n) 13 und die kraftschlüssige Verbindung durch den Endanschlag.

Für die Auswertung dieser Phase befindet sich in den Scheiben 11 und 12 jeweils eine Oeffnung 15, die im Falle der Relativverdrehung deckungsgleich ist, und die einer Lichtschranke 16 die Durchsicht und somit das Schalten ermöglicht.

In Verbindung mit einer entsprechenden Steuerelektronik kann diese Ja/Nein-Information ausgewertet und für die Gerätesteuerung verwendet werden. Diese Technik lässt sich mit Leichtigkeit in das Gerät, dargestellt in Fig. 1, implementieren, wobei die in Fig. 2 dargestellte Technik grundsätzlich bei jedwelchen Geräten Verwendung finden kann, wo mittels einer Abschabvorrichtung eine portionsweise Zerkleinerung eines Gutes erfolgt. Speziell eignet sich diese Technik hervorragend für die portionsweise Zerkleinerung von blockförmig gefrorenen Lebensmitteln.

Die Füllgraderkennung kann aber auch elektronisch mittels Schrittausfallzählung erfolgen, wobei der dazu erforderliche mechanische Aufbau der Vorschubeinheit Fig. 1 zu entnehmen ist. Die Funktionsweise dieser Technik kann wie folgt beschrieben werden:

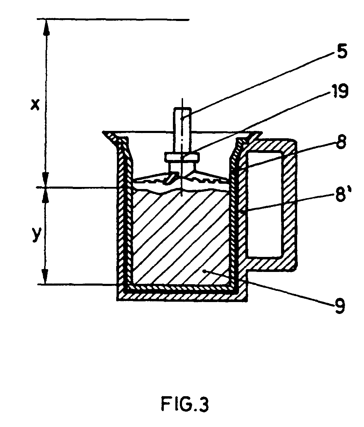

Beim Start des Gerätes erfolgt der Vorschub durch die schrittweise Rotation des eingebauten Schrittmotors 6 so lange, bis die Vorschubwelle bzw. Gewindespindel 5 den gefrorenen Lebensmittelblock im Becher 8 erreicht. Nach dem Auftreffen der Rotationsflügel auf das gefrorene Gut steigt einerseits die Stromaufnahme des Schrittmotors und in der weiteren Folge kommt der Motor ausser tritt; man spricht von Schrittverlusten. Diese Werte werden von einer Steuerelektronik ausgewertet und mittels eines Schrittzählers (z.B. eines Mikroprozessors) wird die Portionierung errechnet resp. die Vorschubgeschwindigkeit eingestellt. Der Ablauf dieser Technik wird anhand der schematischen Darstellung in Fig. 3 näher erläutert, in welcher Fig. 3 das frontseitige Ende der Vorschubwelle bzw. Gewindespindel 5 dargestellt ist sowie die frontseitig dazu angeordneten Rotationsflügel 19. Dargestellt ebenfalls im Schnitt das Gefäss 8 mit einer Schutzhülle 8', in welcher das blockförmig gefrorene Lebensmittel 9' angeordnet ist. Der Ablauf ist wie folgt:

1. Start von der Position 0
2. Die Schritte x bis zur Erkennung der Eisoberkante speichern
3.

Portionenberechnung =

$$\frac{Maximalschritte\ (x+y) - bisherige\ Schritte}{Portionsschritte}$$

4. Eingestellte Portionen oder Maximalschritte abarbeiten und
5. Rückkehr zu Position 0.

Diese Technik gestattet eine sehr präzise Füllgraderkennung und Portionierung der blockförmig gefrorenen Lebensmittel.

Eines der Kernprobleme bei der Entwicklung des erfindungsgemässen Gerätes war die Montage und Demontage des Rotationsflügels. Aus Sicherheitsgründen kam nur eine automatische Flügelaufnahme in Frage. Auch hierzu sind zwei Techniken möglich, welche aus dem erwähnten Schweizer Patent CH 685 321 nicht bekannt sind. Es handelt sich dabei entweder um eine Schrägverzahnkupplung mit magnetischer Flügelhalterung im Becherdeckel oder um eine Schrägverzahnkupplung mit mechanischer Flügelhalterung im Becherdeckel.

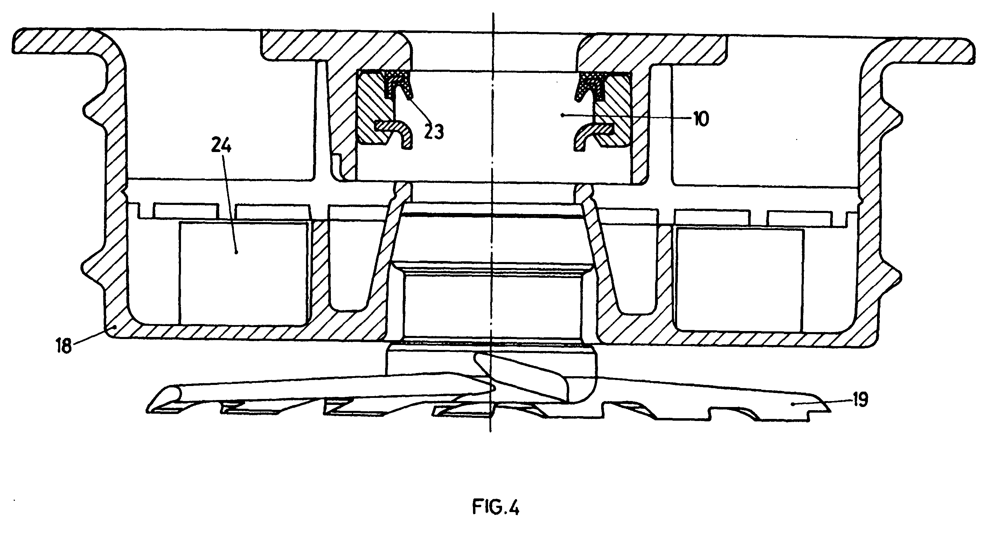

In Fig. 4 ist die Funktionsweise und der mechanische Aufbau der erstgenannten Schrägverzahnungskupplung mit magnetischer Flügelhalterung im Becherdeckel schematisch anhand eines Schnittes im Bereich des Becherdeckels 18 dargestellt.

Der Aufbau und die Konstruktion der Flügelarretierung (Flügel und Flügelaufnahme) ist grundsätzlich neu ausgebildet verglichen mit dem Gerät beschrieben in der CH 685 321. Am untern Ende der Vorschubwelle bzw. Gewindespindel 5 (in Fig. 4 nicht dargestellt) befindet sich eine Schrägverzahnung mit einer Verdrehung von ca. 75° in Drehrichtung der Welle bzw. Spindel. Im Mittelpunkt der Welle befindet sich ein Permanentmagnet. Der Flügel 19 bildet das Gegenstück zu der Wellenverzahnung. Durch die Kraft des Permanentmagneten und der Rotationsgeschwindigkeit der Welle bzw. Spindel schraubt sich der Flügel fest.

Diesen Effekt nutzend wurde nun der in Fig. 4 im Schnitt dargestellte Becherdeckel 18 entwickelt, der den Flügel so lange mittels eines Ringmagneten 24 hält, bis die Vorschubwelle in den Flügel eintaucht, diesen arretiert und sich in die Bearbeitungsposition begibt.

Der Montage- und Demontageablauf erfolgt folgendermassen:

- Der Flügel 19 wird in die Oeffnung 10 des Becherdeckels 18 gesteckt und von dessen Magneten 24 gehalten.

- Der Becherdeckel 18 wird auf den Becher 8 (nicht dargestellt) gesteckt und mit diesem in das Gerät eingeführt.

- Nach dem Start erfolgt der Vorschub der Welle bzw. Spindel in Richtung Flügelanordnung 19 und gleitet an der Wellendichtung 23 vorbei in den Flügel 19.

- Ab diesem Moment wird der Flügel 19 vom Permanentmagneten der Vorschubwelle gehalten.

- Die Vorschubwelle überwindet das Kraftfeld des Ringmagneten 24 und taucht weiter in den Becher 8 ein.

- Nach einer definierten Anzahl von Schritten des Schrittmotors wird der Hauptmotor gestartet und der Flügel arretiert sich endgültig auf der Welle.

- Die Demontage erfolgt in umgekehrter Reihenfolge.

Die Funktionsweise und der mechanische Aufbau der Schrägverzahnungskupplung mit mechanischer Flügelhalterung im Becherdeckel kann wie folgt beschrieben werden:

Grundsätzlich sind der Aufbau und die Konstruktion der Flügelarretierung (Flügel und Flügelaufnahme) identisch mit der Beschreibung bezogen auf die Darstellung in Fig. 4, ausgenommen der Permanentmagnet 24 im Becherdeckel 18. Anstelle des Ringmagneten sind mechanische Schnappnasen im Deckel vorgesehen. Das Funktionsprinzip entspricht demjenigen verwendet beim Zusammenfügen von Gartenschläuchen unter Verwendung eines allgemein üblichen und bekannten Schnappsystems. Durch die Konstruktion der sogenannten Schnappnasen (Winkel) können die Abzieh- bzw. Haltekräfte eingestellt werden.

Bei den unter Bezug auf die Fig. 1-4 beispielsweise dargestellten Ausführungsformen eines Gerätes zur Herstellung von mousseartigen Speisen, handelt es sich selbstverständlich nur um Beispiele für das bessere Verständnis der vorliegenden Erfindung. Anhand der Fig. 2-4 sollen mögliche spezielle Ausgestaltungen des erfindungsgemässen Gerätes dargelegt werden. Selbstverständlich ist es möglich, diese spezifischen Ausgestaltungen speziell unter Bezug auf das Gerät dargestellt in Fig. 1 zu verwenden, oder aber generell für analoge Geräte, beispielsweise zur Herstellung von Massen mit unterschiedlicher Konsistenz wie insbesondere Softeis und mousseartige Speisen. Auch die Materialwahl für die einzelnen Komponenten des erfindungsgemässen Gerätes ist beliebig und es ist unerheblich, ob nun Metalle oder speziell geeignete Kunststoffe für die einzelnen Komponenten verwendet werden. So ist es möglich, rostfreien Stahl wie Chromstahl, andere geeignete Legierungen, Aluminium oder auch Kunststoffe, wie insbesondere speziell lebensmitteltaugliche Kunststoffe, wie Thermoplaste, Duroplaste, verstärkte Kunststoffe, usw. zu verwenden. So hat es sich beispielsweise als vorteilhaft erwiesen, den für die Aufnahme des blockförmigen Nahrungsmittels vorgeschlagenen Becher aus Kunststoff zu fertigen wie beispielsweise aus Polypropylen. Auch für die mechanischen Teile wie beispielsweise die Hohlwelle und die Spindelwelle können anstelle von Metall verstärkte Kunststoffe verwendet werden, wobei diese Beispiele auf x-beliebige Art und Weise erweitert oder ergänzt werden können.

Erfindungswesentlich ist ein Gerät zur Herstellung von einer mousseartigen Speise, bei welchem eine Zerkleinerungseinrichtung mit veränderbarem Vorschub des Zerkleinerungsorganes vorgesehen ist, wobei die Zerkleinerungseinrichtung ein Rotationsflügel aufweisendes Zerkleinerungsorgan umfasst und dass Mittel vorgesehen sind, um das Verhältnis Flügelrotationsgeschwindigkeit zu Vorschubgeschwindigkeit zu variieren.

**Patentansprüche**

1. Vorrichtung zum Herstellen eines crèmeartigen oder schaumartigen Nahrungsmittels aufweisend ein Gefäss zur Aufnahme eines im wesentlichen in Blockform vorliegenden Nahrungsmittels sowie eine Zerkleinerungseinrichtung mit veränderbarem Vorschub eines Zerkleinerungsorganes in Richtung zum Gefäss, wobei die Zerkleinerungseinrichtung (3,4,5) an ihrem, dem Gefäss zugerichteten, Ende ein Rotationsflügel aufweisendes Zerkleinerungsorgan (19) aufweist und Mittel (6) vorgesehen sind, um das Verhältnis Flügelrotationsgeschwindigkeit zu Vorschubgeschwindigkeit zu variieren, **dadurch gekennzeichnet, dass** die Zerkleinerungseinrichtung eine Vorschubeinheit aufweist umfassend eine rotierende Hohlwelle (3) sowie eine innenliegende, mit der Hohlwelle über mindestens ein Gewinde oder Profil rotierend wirkverbundene Gewindespindel (5), wobei entweder die Hohlwelle oder die innenliegende Gewindespindel angetrieben ist und die für den Vorschub erforderliche relative Drehzahländerung zwischen Welle und Spindel mittels eines weiteren Antriebsaggregates (6) bewirkt wird, welches mit der Welle oder der Spindel fest verbunden ist und das jeweils andere Element, d.h. die Spindel oder die Welle, antreibt bzw. verzögert.

2. Vorrichtung nach Anspruch 1, **dadurch gekennzeichnet, dass** die Hohlwelle (3) angetrieben ist und ein Schrittmotor (6) auf der Hohlwelle montiert ist und mit dieser mitdreht und dessen Antriebswelle mit der Gewindespindel (5) verbunden ist.

3. Vorrichtung nach Anspruch 1 oder 2, **dadurch gekennzeichnet, dass** die rotierende Hohlwelle mit Innenprofil eine Leitmutter (4) mitnimmt, welche über ein Innengewinde verfügt, in welchem die Gewindespindel läuft.

4. Vorrichtung nach einem der Ansprüche 2 oder 3, **dadurch gekennzeichnet, dass** die Stromversorgung und Impulszuführung zum Schrittmotor über einen oder mehrere Schleifringe (7) und/oder Kohlebürsten erfolgt.

5. Vorrichtung nach einem der Ansprüche 2 bis 4, **dadurch gekennzeichnet, dass** eine Steuerelektronik vorgesehen ist für die unabhängige Steuerung und Einstellung der Vorschubgeschwindigkeit, der Richtung und der Weglänge, d.h. dass die +/- Anzahl der Schritte/Umdrehungen des Schrittmotors (6) unabhängig von der Rotationsgeschwindigkeit der Hohlwelle (3) wählbar bzw. einstellbar ist.

6. Vorrichtung nach einem der Ansprüche 1 bis 5, **gekennzeichnet durch** eine Füllgraderkennung für die Vorschubeinheit zum Abarbeiten eines Füllgutes im Gefäss, wobei die Welle eines Antriebmotors, welcher vorgesehen ist zum Antreiben der Vorschubeinheit, mit einer Scheibe (11) fest verbunden ist, welche Scheibe mit einer weiteren dazu koaxial angeordneten Scheibe (12) über ein Gleitlager verbunden ist, welche weitere Scheibe eine weiterführende Antriebswelle aufweist für das Uebertragen des Antriebes auf die Vorschubeinheit, und dass die zwei mittels des Gleitlagers verbundenen Scheiben kraftschlüssig miteinander verbunden sind über eine quer zur Drehrichtung angeordnete Federanordnung (13) mit Endanschlag; die Abstimmung der Federparameter (Federkonstante und Vorspannung) so ausgelegt ist, dass beim Start und im Leerlauf die beiden Scheiben zueinander nicht relativ verdreht sind und erst bei beginnendem Abarbeiten des Füllgutes und der daraus resultierenden Reibung eine Verdrehung der Scheiben zueinander sowie ein Zusammendrücken der Federanordnung erfolgt, und dass für die Auswertung dieser Phase in den beiden Scheiben je eine Oeffnung (15) vorgesehen ist, die im Falle der Relativverdrehung in dekungsgleiche Position rotierbar sind, und dass weiter eine Lichtschranke (16) vorgesehen ist, welche bei Nichtdurchsicht oder bei Durchsicht **durch** die beiden Oeffnungen (15) einen Impuls auslöst.

7. Vorrichtung nach einem der Ansprüche 1 bis 5, **gekennzeichnet durch** eine Füllgraderkennung für die Vorschubeinheit zum Abarbeiten eines Füllgutes im Gefäss, wobei im Schrittmotor eine Steuerelektronik vorgesehen ist, aufweisend einen Schrittzähler, wie beispielsweise einen Mikroprozessor, mittels welchem der Füllgrad, eine oder mehrere Portionierung(-en) resp. die Vorschubgeschwindigkeit erkennbar bzw. einstellbar ist.

8. Vorrichtung nach einem der Ansprüche 1 bis 5, **gekennzeichnet durch** eine Flügelarretierung für die Vorschubeinheit zum Abarbeiten eines Füllgutes im Gefäss, wobei im Gefässdeckel (18) eine Magnetanordnung (24) vorgesehen ist, um ein in die mittige Oeffnung (10) des Gefässdeckels einsteckbare Flügelanordnung (19) zu halten, und dass am Vorschubende der Vorschubspindel ein Permanentmagnet vorgesehen ist zum Halten der Flügelanordnung an der Vorschubspindel, wobei die Arretierung der Flügelanordnung am Frontende der Gewindespindel mittels des Kraftfeldes der Magnetanordnung im Gefässdeckel erfolgt.

9. Vorrichtung nach einem der Ansprüche 1 bis 5, **gekennzeichnet durch** eine Flügelarretierung für die Vorschubeinheit zum Abarbeiten eines Füllgutes im Gefäss, wobei in einer mittigen Oeffnung im Gefässdeckel sog. Schnappnasen vorgesehen sind, um die Flügelanordnung einrastend von der Innenseite des Gefässes am Deckel zu befestigen, und dass am Frontende der Gewinde bzw. Vorschubspindel ein Permanentmagnet vorgesehen ist, um die Flügelanordnung zu halten.

10. Verfahren zum Herstellen eines crèmeartigen oder schaumartigen Nahrungsmittels aus einem im wesentlichen in Blockform vorliegenden vorzugsweise gefrorenen Nahrungsmittel mittels einer Vorrichtung nach einem der Ansprüche 1 bis 9, **dadurch gekennzeichnet, dass** die Rotationsgeschwindigkeit eines Rotationsflügels, welcher an der Zerkleinerungseinrichtung an ihrem dem Nahrungsmittel zugerichteten Ende angeordnet ist, im Verhältnis zur Vorschubgeschwindigkeit der Zerkleinerungseinrichtung variiert wird, so dass eine vorbestimmte Konsistenz des crèmeartigen oder schaumartigen Nahrungsmittels erhalten wird.

11. Verfahren nach Anspruch 10, **dadurch gekennzeichnet, dass** der Vorschub dadurch bewirkt wird, indem eine rotierende Hohlwelle mit Innenprofil eine Leitmutter mitnimmt, die Leitmutter ihrerseits über ein Innengewinde verfügt, in welchem eine Gewindespindel läuft und in dem die Gewindespindel eine relative Drehzahländerung gegenüber der gleichmässig angetriebenen Hohlwelle erfährt, sodass der Vorschub entsprechend der Richtung der Drehzahländerung +/- entsprechend vor/zurück bewirkt wird.

12. Verfahren nach Anspruch 11, **dadurch gekennzeichnet, dass** ein auf der Hohlwelle montierter Schrittmotor, der mit dieser fest mitdreht, die Gewindespindel antreibt und dass mittels einer Steuerelektronik im Schrittmotor die Vorschubgeschwindigkeit die Richtung und die Weglänge voneinander unabhängig eingestellt werden und dass als Konsequenz die +/- Anzahl der Schritte/Umdrehungen des Schrittmotors unabhängig von der Rotationsgeschwindigkeit der Gewindespindel gewählt bzw. eingestellt werden.

13. Verfahren zur Erkennung des Füllgrades mittels einer Vorrichtung nach Anspruch 7, **dadurch gekennzeichnet, dass** beim Start der Vorrichtung bzw. der Vorschubeinheit durch die schrittweise Rotation des Schrittmotors der Vorschub so lange erfolgt, bis die Gewindespindel bzw. die Flügelanordnung das blockartige Lebensmittel erreicht, die Schritte bis zur Erkennung der Oberkante des Nahrungsmittelblockes gespeichert werden, die Füllgraderkennung bzw. Portionenberechnung erfolgt gemäss der Korrelation:

maximal mögliche Schritte, minus bisherige Schritte,

geteilt durch Portionsschritte (Schritte seit der Erkennung der Nahrungsmitteloberkante),

und dass nach maximal zulässigen Abarbeitungsschritten die Spindel zur Position 0 zurückkehrt.

14. Verfahren zur automatischen Flügelarretierung mittels einer Vorrichtung nach Anspruch 8, **dadurch gekennzeichnet, dass** zunächst die Flügelanordnung in eine mittige Oeffnung im Gefässdeckel eingeführt wird und in dieser mittels einer Magnetanordnung im Gefässdeckel gehalten wird, anschliessend der Gefässdekkel auf das Gefäss gesteckt wird, in welchem das blockförmige Nahrungsmittel angeordnet ist, anschliessend nach dem Start des Vorschubes die Gewindespindel in Richtung Flügelanordnung getrieben wird und mittels einer am unteren Ende der Spindel angeordneten Schrägverzahnung mit einer Verdrehung von vorzugsweise ca. 75° in Drehrichtung der Spindel in ein entsprechendes Gegenstück zur Spindelverzahnung in der Flügelanordnung getrieben wird, anschliessend die Flügelanordnung von einem Permanentmagneten, welcher in der Vorschubspindel angeordnet ist, gehalten wird und durch die Kraft des Permanentmagneten und der Rotationsgeschwindigkeit sich der Flügel festschraubt, wobei die Flügelanordnung so lange mittels der Magnetanordnung im Gefässdekkel festgehalten wird, bis die Vorschubspindel in der Flügelanordnung eingetaucht ist, diese arretiert hat und sich in Bearbeitungsposition begibt.

15. Gastronomie- oder Haushaltgerät mit einer Vorrichtung nach einem der Ansprüche 1 bis 9.

**Claims**

1. Device for production of a cream-like or foam-like foodstuff having a vessel to hold a foodstuff, present essentially in block form, and a crushing device with variable advance of a crushing element in the direction towards the vessel, where the crushing device (3, 4 5) has at its end pointing towards the vessel a crushing element (19) with a rotation blade, and means (6) are provided to vary the ratio of the blade rotation speed to advance speed, **characterised in that** the crushing device has an advance unit comprising a rotary hollow shaft (3) and an internal threaded spindle (5) actively connected rotatably with the hollow shaft via at least one thread or profile, where either the hollow shaft or the internal threaded spindle is driven and the relative speed change between the shaft and the spindle necessary for advance is achieved by means of a further drive device (6) which is firmly connected with the shaft or spindle and which drives or retards the other element in each case, i.e. the spindle or the shaft.

2. Device according to claim 1, **characterised in that** the hollow shaft (3) is driven and a stepper motor (6) is mounted on the hollow shaft and turns with this and its drive shaft is connected with the threaded spindle (5).

3. Device according to claim 1 or 2, **characterised in that** the rotating hollow shaft with internal profile carries with it a guide nut (4) which has an internal thread in which the threaded spindle runs.

4. Device according to any of claims 2 or 3, **characterised in that** the power supply and pulse supply to the stepper motor take place via one or more slip rings (7) and/or carbon brushes.

5. Device according to any of claims 2 to 4, **characterised in that** control electronics are provided for the independent control and adjustment of the advance speed, direction and travel length, i.e. that the +/- number of steps/rotations of the stepper motor (6) can be selected or set independently of the rotation speed of the hollow shaft (3).

6. Device according to any of claims 1 to 5, **characterised by** a fill level detection for the advance unit for processing a filling product in the vessel, where the shaft of a drive motor intended to drive the advance unit is firmly connected with a disc (11), which disc is connected via a slide bearing with a further disc (12) arranged coaxial to this, which further disc has a continuing drive shaft to transfer the drive to the advance unit, and that the two discs connected by means of the slide bearing are connected together by force fit via a spring arrangement (13) with end stop arranged transverse to the direction of rotation; the spring parameters (spring constant and pretension) are determined such that on start and idle the two discs do not twist relative to each other and only at the start of processing of the filling and the resulting friction are the discs twisted relative to each other and the spring arrangement compressed, and that for analysis of this phase in each of the two discs is provided an opening (15) which in the case of relative twist can be rotated into aligned positions and that furthermore a light barrier (16) is provided which triggers a pulse when not passing through or when passing through the two openings (15).

7. Device according to any of claims 1 to 5, **characterised by** a fill level detection for the advance unit for processing a filling in the vessel, where in the stepper motor are provided control electronics having a step counter, such as for example a microprocessor, by means of which the fill level, one or more portions or the advance speed can be detected or set.

8. Device according to any of claims 1 to 5, **characterised by** a blade stop for the advance unit for processing a filling in a vessel, where in the vessel cover (18) is provided a magnet arrangement (24) in order to hold a blade arrangement (19) which can be inserted in the central opening (10) of the vessel cover, and that at the advance end of the advance spindle is provided a permanent magnet to hold the blade arrangement on the advance spindle, where the blade arrangement on the front end of the threaded spindle is stopped by means of a force field from the magnet arrangement in the vessel cover.

9. Device according to any of claims 1 to 5, **characterised by** a blade stop for the advance unit for processing a filling in the vessel, where in a central opening in the vessel cover, snap lugs are provided in order to attach to the cover the blade arrangement engaging from the inside of the vessel, and that on the front end of the thread or advanced spindle is provided a permanent magnet in order to hold the blade arrangement.

10. Process for production of a cream-like or foam-like foodstuff from a foodstuff, preferably frozen and present essentially in block form, by means of a device according to any of claims 1 to 9, **characterised in that** the rotation speed of a rotation blade arranged on the crushing device at its end facing the foodstuff is varied in relation to the advance speed of the crushing device so that a predetermined consistency of the cream-like or foam-like foodstuff is obtained.

11. Process according to claim 10, **characterised in that** the advance is achieved by a rotating hollow shaft with inner profile carrying with it a guide nut, the guide nut in turn having an inner thread in which runs a threaded spindle and in which the threaded spindle undergoes a relative change of rotation speed in relation to the evenly driven hollow shaft, so that the advance takes place correspondingly forwards or backwards in accordance with the direction of rotation speed change +/-.

12. Process according to claim 11, **characterised in that** a stepper motor, mounted on the hollow shaft which rotates firmly with this, drives the threaded spindle and that by means of control electronics in the threaded spindle, the advance speed, direction and travel length can be set independent of each other and that as a consequence the +/number of steps/revolutions of the stepper motor can be selected or set irrespective of the rotation speed of the threaded spindle.

13. Process for detection of a fill level by means of a device according to claim 7, **characterised in that** on start up of the device or advance unit, through the stepped rotation of the stepper motor, the advance takes place until the threaded spindle or blade arrangement reaches the block-like foodstuff, the steps until detection of the top edge of the foodstuff block are stored, the fill level detection or portion calculation is performed according to the correlation:

> maximum possible steps, minus former steps divided by portion steps (steps from detection of food top edge),

and that after the maximum permitted processing steps, the spindle returns to position 0.

14. Process for automatic blade stoppage by means of a device according to claim 8, **characterised in that** first the blade arrangement is introduced in a centre opening in the vessel cover and held therein in the vessel cover by means of a magnet arrangement, then the vessel cover is placed on the vessel in which is arranged the block-like foodstuff, then after the start of advance the threaded spindle is driven in the direction of the blade arrangement and, by means of an oblique toothing arranged on the lower end of the spindle, is driven with a twist of preferably approximately 75° in the direction of rotation of the spindle into a corresponding counterpart to the spindle toothing in the blade arrangement, then the blade arrangement is held by a permanent magnet arranged in the advance spindle and the blade screws itself firmly in by the force of the permanent magnet and the rotation speed, where the blade arrangement is held by means of the magnet arrangement in the vessel cover until the advance spindle has engaged in the blade arrangement, stopped this and is in a processing position.

15. Catering or domestic appliance with a device according to any of claims 1 to 9.


**Revendications**

1. Dispositif pour produire un aliment crémeux ou mousseux, comprenant un récipient destiné à recevoir un aliment se présentant globalement sous forme de bloc, et un broyeur avec une avance variable de l'organe broyeur en direction du récipient, étant précisé que le broyeur (3, 4, 5) comporte à son extrémité tournée vers le récipient un organe broyeur (19) pourvu d'ailettes rotatives, et qu'il est prévu des moyens (6) pour faire varier le rapport de la vitesse de rotation des ailettes à la vitesse d'avance, **caractérisé en ce que** le broyeur comporte une unité d'avance comprenant un arbre creux rotatif (3) et une tige filetée intérieure (5) qui est en relation fonctionnelle de rotation avec ledit arbre creux par l'intermédiaire d'au moins un filetage ou d'un profil, étant précisé que soit l'arbre creux, soit la tige filetée intérieure est entraîné et que la variation de vitesse de rotation relative entre l'arbre et la tige qui est nécessaire pour l'avance est réalisée à l'aide d'un bloc d'entraînement supplémentaire (6) qui est solidaire de l'arbre ou de la tige et qui entraîne ou ralentit l'autre élément, c'est-à-dire la tige ou l'arbre.

2. Dispositif selon la revendication 1, **caractérisé en ce que** l'arbre creux (3) est entraîné et un moteur pas à pas (6) est monté sur l'arbre creux et tourne avec celui-ci, et l'arbre d'entraînement dudit moteur est relié à la tige filetée (5).

3. Dispositif selon la revendication 1 ou 2, **caractérisé en ce que** l'arbre creux en rotation pourvu d'un profil intérieur entraîne un écrou directeur (4) qui présente un filetage intérieur dans lequel la tige filetée tourne.

4. Dispositif selon la revendication 2 ou 3, **caractérisé en ce que** l'alimentation électrique du moteur pas à pas et la transmission des impulsions à celui-ci se font grâce à une ou plusieurs bagues collectrices (7) et/ou à des balais de charbon.

5. Dispositif selon l'une des revendications 2 à 4, **caractérisé en ce qu'**il est prévu un système électronique de commande pour une commande et un réglage indépendants de la vitesse d'avance, du sens et de la course, c'est-à-dire que le nombre +/- de pas/de tours du moteur pas à pas (6) peut être choisi et réglé indépendamment de la vitesse de rotation de l'arbre creux (3).

6. Dispositif selon l'une des revendications 1 à 5, **caractérisé par** une détection du degré de remplissage pour l'unité d'avance en vue du traitement d'un produit de remplissage dans le récipient, étant précisé que l'arbre d'un moteur d'entraînement prévu pour entraîner l'unité d'avance est solidaire d'une plaque (11) qui est reliée par l'intermédiaire d'un palier lisse à une seconde plaque coaxiale (12), laquelle comporte un arbre d'entraînement pour transmettre l'entraînement à l'unité d'avance, et en ce que les deux plaques reliées à l'aide du palier lisse sont reliées par force par l'intermédiaire d'un dispositif formant ressort (13) disposé transversalement par rapport au sens de rotation et pourvu d'une butée de fin de course ; le réglage des paramètres de ressort (constante de ressort et contrainte) est calculé pour que lors du démarrage et à vide, les deux plaques ne tournent pas l'une par rapport à l'autre, et qu'une rotation des plaques l'une par rapport à l'autre et une compression du dispositif formant ressort n'aient lieu que lorsque le traitement du produit de remplissage commence et lors de la friction qui en résulte, en ce qu'il est prévu dans les deux plaques, pour l'évaluation de cette phase, des ouvertures respectives (15) qui, en cas de rotation relative, peuvent être amenées dans une position coïncidente, et en ce qu'il est également prévu une barrière lumineuse (16) qui déclenche une impulsion lorsqu'elle traverse ou qu'elle ne traverse pas les deux ouvertures (15).

7. Dispositif selon l'une des revendications 1 à 5, **caractérisé par** une détection du degré de remplissage pour l'unité d'avance en vue du traitement d'un produit de remplissage dans un récipient, étant précisé qu'il est prévu dans le moteur pas à pas un système électronique de commande comprenant un compteur pas à pas tel qu'un microprocesseur à l'aide duquel le degré de remplissage, une ou plusieurs division en portions et la vitesse d'avance peuvent être détectés et réglés.

8. Dispositif selon l'une des revendications 1 à 5, **caractérisé par** un blocage d'ailettes pour l'unité d'avance en vue du traitement d'un produit de remplissage dans le récipient, étant précisé que dans le couvercle (18) du récipient, il est prévu un dispositif magnétique (24) pour retenir un dispositif à ailettes (19) apte à être emboîté dans l'ouverture centrale (10) dudit couvercle, et en ce qu'il est prévu, à l'extrémité d'avance de la tige d'avance, un aimant permanent pour retenir le dispositif à ailettes sur ladite tige d'avance, le blocage du dispositif à ailettes se faisant à l'extrémité frontale de la tige à l'aide d'un champ de force du dispositif magnétique prévu dans le couvercle du récipient.

9. Dispositif selon l'une des revendications 1 à 5, **caractérisé par** un blocage d'ailettes pour l'unité d'avance en vue du traitement d'un produit de remplissage dans le récipient, étant précisé qu'il est prévu dans une ouverture centrale du couvercle du récipient ce qu'on appelle des saillies d'encliquetage pour fixer le dispositif à ailettes par encliquetage au couvercle, par le côté intérieur du récipient, et en ce qu'il est prévu à l'extrémité frontale du filetage ou de la tige filetée un aimant permanent pour retenir le dispositif à ailettes.

10. Procédé pour produire un aliment crémeux ou mousseux à partir d'un aliment se présentant globalement sous forme de bloc et de préférence gelé, à l'aide d'un dispositif selon l'une des revendications 1 à 9, **caractérisé en ce qu'**on fait varier la vitesse de rotation d'une ailette rotative, disposée à l'extrémité du broyeur tournée vers l'aliment, par rapport à la vitesse d'avance dudit broyeur pour qu'on obtienne une consistance prédéfinie de l'aliment crémeux ou mousseux.

11. Procédé selon la revendication 10, **caractérisé en ce que** l'avance est obtenue du fait qu'un arbre creux en rotation pourvu d'un profil intérieur entraîne un écrou directeur, que ledit écrou conducteur présente lui-même un filetage intérieur dans lequel une tige filetée tourne et dans lequel le tige filetée subit une variation de vitesse de rotation relative par rapport à l'arbre creux, entraîné régulièrement, de sorte que l'avance se fait en avant/en arrière suivant le sens de la variation de vitesse de rotation +/-.

12. Procédé selon la revendication 11, **caractérisé en ce qu'**un moteur pas à pas qui est monté sur l'arbre creux et qui est solidaire en rotation de celui-ci entraîne la tige filetée, **en ce que** grâce à un système électronique de commande dans le moteur pas à pas, la vitesse d'avance, le sens et la course sont réglés indépendamment les uns des autres, et **en ce que**, en conséquence, le nombre +/- de pas/de tours du moteur pas à pas sont choisis et réglés indépendamment de la vitesse de rotation de la tige filetée.

13. Procédé pour détecter le degré de remplissage à l'aide d'un dispositif selon la revendication 7, **caractérisé en ce que** lors du démarrage du dispositif et de l'unité d'avance grâce à la rotation pas à pas du moteur pas à pas, l'avance se fait jusqu'à ce que la tige filetée ou le dispositif à ailettes atteigne l'aliment en forme de bloc, les pas effectués jusqu'à la détection du bord supérieur du bloc d'aliment sont mis en mémoire et la détection du degré de remplissage ou le calcul de portions se fait selon la corrélation :

   pas possibles maximaux moins les pas effectués jusque là, divisé par les pas de portions (pas depuis la détection du bord supérieur de l'aliment),

   et **en ce qu'**après des pas de traitement autorisés maximaux, la tige revient à la position 0.

14. Procédé pour le blocage automatique des ailettes à l'aide d'un dispositif selon la figure 8, **caractérisé en ce que** le dispositif à ailettes est tout d'abord introduit dans une ouverture centrale du couvercle du récipient et est maintenu dans cette ouverture à l'aide d'un dispositif magnétique prévu dans ledit couvercle, puis le couvercle est posé sur le récipient dans lequel est disposé l'aliment en forme de bloc, puis, après le démarrage de l'avance, la tige filetée est poussée vers le dispositif à ailettes et est amenée à l'aide d'une denture hélicoïdale disposée à son extrémité inférieure, avec une rotation d'environ 75°, de préférence, dans le sens de rotation de la tige, dans une partie opposée correspondante afin de s'engrener dans le dispositif à ailettes, puis le dispositif à ailettes est maintenu par un aimant permanent qui est disposé dans la tige d'avance, et l'ailette se fixe par vissage grâce à la force de l'aimant permanent et de la vitesse de rotation, le dispositif à ailettes étant immobilisé à l'aide du dispositif magnétique prévu dans le couvercle du récipient jusqu'à ce que la tige d'avance ait pénétré dans le dispositif à ailettes, l'ait bloqué et se trouve en position de traitement.

15. Appareil gastronomique ou ménager pourvu d'un dispositif selon l'une des revendications 1 à 9.

FIG.1

FIG.2

FIG.3

FIG.4